# EUROPEAN PATENT SPECIFICATION

(11) **EP 3 089 039 B1**
(45) Date of publication and mention of the grant of the patent: **20.05.2020**
(21) Application number: 15740109.2
(22) Date of filing: 22.01.2015
(51) Int. Cl.: G06F 11/30, G06F 12/0864, G06F 12/0811, G06F 12/0886, G06F 12/0846, G06F 12/0862, G06F 12/0895, G06F 11/34

(54) **CACHE MANAGEMENT METHOD AND DEVICE**
VERFAHREN UND -VORRICHTUNG ZUR VERWALTUNG EINES ZWISCHENSPEICHERS
PROCÉDÉ ET DISPOSITIF DE GESTION DE CACHE

(30) Priority: 23.01.2014 CN 201410032035
(43) Date of publication of application: 02.11.2016
(73) Proprietor: Huawei Technologies Co., Ltd., Longgang District Shenzhen, Guangdong 518129 (CN)
(72) Inventor: HUANG, Yongbing, Beijing 100190 (CN); CHEN, Mingyu, Beijing 100190 (CN); ZHANG, Kun, Beijing 100190 (CN)
(74) Representative: Pfenning, Meinig & Partner mbB
(86) International application number: PCT/CN2015/071344
(87) International publication number: WO 2015/110046

(56) References cited:
- CN-A- 101 088 074
- CN-A- 101 571 835
- US-A1- 2006 059 309
- US-A1- 2011 208 919
- US-B1- 6 393 521
- US-B1- 6 549 983
- ANTONIO GONZÁLEZ ET AL: "A data cache with multiple caching strategies tuned to different types of locality", PROCEEDINGS OF THE INTERNATIONAL CONFERENCE ON SUPERCOMPUTING. BARCELONA, JULY 3 - 7, 1995; [PROCEEDINGS OF THE INTERNATIONAL CONFERENCE ON SUPERCOMPUTING], NEW YORK, ACM, US, 3 July 1995 (1995-07-03), pages 338-347, XP058173083, DOI: 10.1145/224538.224622 ISBN: 978-0-89791-728-5
- JUURLINK B: "Unified dual data caches", DIGITAL SYSTEM DESIGN, 2003. PROCEEDINGS. EUROMICRO SYMPOSIUM ON SEPT 1-6, 2003, PISCATAWAY, NJ, USA,IEEE, 1 September 2003 (2003-09-01), pages 33-40, XP032159050, DOI: 10.1109/DSD.2003.1231897 ISBN: 978-0-7695-2003-2
- TERESA L JOHNSON ET AL: "Run-time spatial locality detection and optimization", PROCEEDINGS OF THE 30TH ANNUAL IEEE/ACM INTERNATIONAL SYMPOSIUM ON MICROARCHITECTURE. MICRO-30. RESEARCH TRIANGLE PARK, NC, DEC. 1 - 3, 1997; [PROCEEDINGS OF THE ANNUAL INTERNATIONAL SYMPOSIUM ON MICROARCHITEC TURE], LOS ALAMITOS, CA : IEEE COMPUTER, 1 December 1997 (1997-12-01), pages 57-64, XP058128960, ISBN: 978-0-8186-7977-3

## Description

### TECHNICAL FIELD

The present invention relates to the communications field, and in particular, to a cache (cache) management method and apparatus.

### BACKGROUND

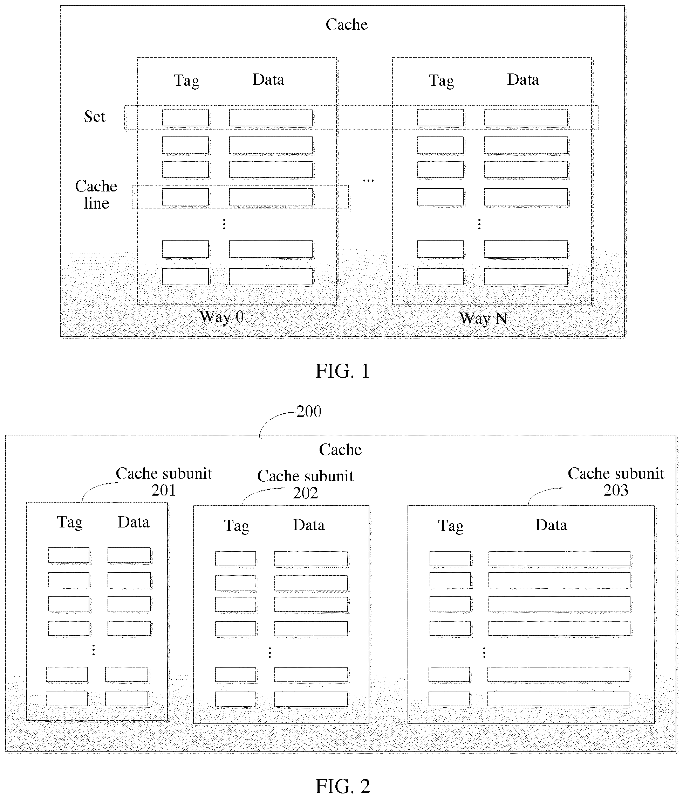

In a development process of computer technologies, an access speed of a main memory is always much slower than a processing speed of a CPU (processor), resulting in that a high speed processing capability of the CPU cannot be fully used, and working efficiency of an entire computer system is affected. To alleviate a conflict that the speed of the CPU does not match that of the main memory, a relatively commonly used method is to use a cache (cache) in a memory hierarchy for temporary memory. For example, the cache may be integrated in the CPU, so that the CPU obtains data relatively quickly. FIG. 1 is a schematic structural diagram of cache with an N-way (way) set associated. As shown in FIG. 1, all cache lines (Cacheline) in the cache have a same size, and each cache line includes a tag domain and a data domain. The tag domain is used to identify the cache line, and the data domain is used to store data to be cached. Specifically, a specific size of the cache line is generally determined by an empirical value, and is mainly related to performance of a CPU. Higher performance of the CPU indicates a larger cache line. The size of the cache line determines a quantity of cache lines when the cache has a same capacity, and also determines power that is consumed when data is read from a memory to a cache and when data is transmitted between caches at different layers. Generally, a specification of the cache line is higher than a specification of data that is to be accessed according to a single access request.

At present, a caching mechanism of the cache is: receiving an access request, and allocating a cache line to the access request; and reading, from a memory according to an address (where data corresponding to the address is data to be accessed) in the access request based on the principle of spatial locality, the data to be accessed and data of an address adjacent to an address of the data to be accessed, and writing, to the cache line that is allocated to the access request, both the data to be accessed and the data of the address adjacent to the address of the data to be accessed. If data that needs to be accessed according to a next access request is already cached in the cache line, the data is directly read from the cache line; or if data that needs to be accessed according to the request is not cached in the cache line, a cache line is allocated to the next access request according to the foregoing caching mechanism, and the data is read from the memory.

When temporary memory is performed by means of the foregoing method, the following problems exist: When spatial locality of data to be accessed is relatively high, enough data of adjacent addresses cannot be cached in a cache line, resulting in that when a subsequent access request is received, a cache line still needs to be reallocated and data still needs to be read from a memory. On one hand, a data read speed is affected. On the other hand, in a case in which there are limited cache lines, data in a cache line is frequently replaced, and a service life of the cache line is affected. When spatial locality of data to be accessed is relatively low, data cached in a cache line is probably not to be accessed according to a subsequent access request, causing a waste of a cache line resource, and a waste of memory bandwidth between a memory and a cache.

US6549983 discloses a cache memory system that reduces the rate of cache misses. The cache memory system includes a first auxiliary storage device which stores first information blocks and a second auxiliary storage device which stores second information blocks fetched from a lower level memory device. Each second block includes a plurality of the first information blocks. A process for fetching information selectively fetches a first or second information block from the lower level memory device and selectively stores the fetched block in the first auxiliary storage device and/or the second auxiliary storage device. Selection of the size of block to fetch and where to store the fetched block is according to whether the data to be referenced by the central controller is in the first auxiliary storage device or the second auxiliary storage device and whether first information blocks that do not include the referenced data are both in the second information block including the referenced data and in the first auxiliary storage device. A control unit that controls the selective fetching and storing maintains state data that includes entries corresponding to second information blocks. Each entry identifies a corresponding second information block and indicates the number of first information blocks that are in the first auxiliary storage device and from the corresponding second information block.

US2011208919A1 discloses methods for quantifying a spatial distribution of accesses to storage systems and for determining spatial locality of references to storage addresses in the storage systems, are described. In one aspect, a method includes determining a measure of spatial distribution of accesses to a data storage system based on multiple distinct groups of accesses to the data storage system, and adjusting a caching policy used for the data storage system based on the determined measure of spatial distribution.

"A data cache with multiple caching strategies tuned to different types of locality" (ANTONIO GONZALEZ ET AL, PROCEEDINGS OF THE INTERNATIONAL CONFERENCE ON SUPERCOMPUTING. BARCELONA, JULY 3 - 7, 1995; [PROCEEDINGS OF THE INTERNATIONAL CONFERENCE ON SUPERCOMPUTING], NEW YORK, ACM, US, (19950703), doi:10.1145/224538.224622, ISBN 978-0-89791-728-5, pages 338 - 347, XP058173083 [X]) discloses a dual data cache with independent parts for managing spatial and temporal locality.

"Unified dual data caches" (JUURLINK B, DIGITAL SYSTEM DESIGN, 2003. PROCEEDINGS. EUROMICRO SYMPOSIUM ON SEPT 1-6, 2003, PISCATAWAY, NJ, USA,IEEE, (20030901), doi:10.1109/DSD.2003.1231897, ISBN 978-0-7695-2003-2, pages 33 - 40, XP032159050 [X]) proposes a cache organization called the Unified Dual Data Cache that employs only one (unified) cache unit.

### SUMMARY

The present invention is defined in the appended independent claims to which reference should be made. Advantageous features are set out in the appended dependent claims. The embodiments of the following description which are not covered by the appended claims are provided for mere illustrative purposes. Embodiments of the present invention provide a cache management method and apparatus according to the independent claims, which can resolve a problem of how to improve cache resource utilization.

To achieve the foregoing objective, the following technical solutions are used in the embodiments of the present invention:
According to a first aspect, an embodiment of the present invention provides a cache (cache) management method, where multiple cache subunits are disposed in a cache, and each of the cache subunits includes multiple cache lines; a length of the cache line included in each cache subunit is different from a length of a cache line included in another cache subunit; each of the cache subunits is configured to store data at a corresponding level, the level is a strength level of spatial locality of the data, and a correspondence between the cache subunit and the level is: the length of the cache line included in the cache subunit is in a positive correlation with strength of spatial locality of the data; and the method includes:
receiving an access request, and determining data that is to be accessed and that needs to be accessed according to the access request;
determining a strength level of spatial locality of the data to be accessed; and
allocating, according to the strength level of the spatial locality of the data to be accessed, a cache subunit corresponding to the level to the data to be accessed.

With reference to the first aspect, in a first possible implementation manner, the determining a strength level of spatial locality of the data to be accessed includes:
recording addresses of data that is to be accessed and that need to be accessed according to access requests, and collecting statistics about access rules of the addresses of the data to be accessed, where the access rules includes a quantity of times or a probability that data of an address adjacent to the addresses is accessed according to another access request; and
classifying, into levels according to the quantity of times or the probability that data of the address adjacent to the addresses of the data to be accessed is accessed by another access request, spatial locality of the data to be accessed.

With reference to the first possible implementation manner of the first aspect, in a second possible implementation manner, the method further includes:
collecting, within a preset time period, statistics about strength levels of spatial locality of data to be accessed, and calculating a first ratio, where the first ratio is used to represent a proportional relationship between or among the data to be accessed having different levels of spatial locality;
calculating a second ratio, where the second ratio is used to represent a proportional relationship between or among the cache subunits in the cache that include cache lines having different lengths; and
when a difference between the first ratio and the second ratio is greater than a preset threshold, adjusting a quantity of the cache lines in the cache subunit until the difference between the second ratio and the first ratio falls within a range of the preset threshold after the adjustment.

With reference to the first aspect, or the first possible implementation manner of the first aspect, or the second possible implementation manner of the first aspect, in a third possible implementation manner, after the receiving an access request, and determining data that is to be accessed and that needs to be accessed according to the access request, the method further includes:
determining, according to the strength level of the spatial locality of the data to be accessed, a size of data to be temporarily stored;
adjusting the length of the cache line in the cache subunit according to the size of the data to be temporarily stored, and allocating an adjusted cache line to the data to be temporarily stored, where a length of the adjusted cache line matches the size of the data to be temporarily stored; and
establishing and maintaining an index bitmap based on a change in the length of the cache line in the cache subunit, where the index bitmap is used to indicate a tag domain and a data domain that are in the cache line.

With reference to the first aspect, in a fourth possible implementation manner, that the multiple cache subunits are disposed in the cache includes:
dividing the cache by ways way and/or by sets set, to determine the multiple cache subunits, and setting the length of the cache line in each cache subunit.

With reference to the third possible implementation manner of the first aspect, in a fifth possible implementation manner, the access request includes a physical address, the physical address is used to identify the data to be accessed, and the physical address includes a tag domain and a set domain that are of the data to be accessed; and
the method further includes:
sending the access request to each of the cache subunits; and
determining one or more cache lines that correspond to the set domain of the data to be accessed and that are in each of the cache subunits, comparing tag domains of the one or more cache lines with the tag domain of the data to be accessed, and determining a cache line, which has a same tag domain as the data to be accessed, in the one or more cache lines as a cache line in which the data to be accessed is stored.

With reference to the third possible implementation manner of the first aspect, in a sixth possible implementation manner, the access request includes a physical address, the physical address is used to identify the data to be accessed, and the physical address includes a tag domain and a set domain that are of the data to be accessed; and
the method further includes:
maintaining a list for each cache subunit, where the list is used to record a characteristic value of data stored in each cache subunit;
when the access request is received, determining a characteristic value of the data that is to be accessed and that needs to be accessed according to the access request;
determining a cache subunit, which corresponds to a list in which the characteristic value of the data to be accessed is recorded, as a target cache subunit; and
sending the access request to the target cache subunit, determining one or more cache lines in the target cache subunit that correspond to the set domain of the data to be accessed, comparing tag domains of the one or more cache lines with the tag domain of the data to be accessed, and determining a cache line, which has a same tag domain as the data to be accessed, in the one or more cache lines as a cache line in which the data to be accessed is stored.

According to a second aspect, an embodiment of the present invention further provides a cache cache management apparatus, where the apparatus is configured to manage a cache in which multiple cache subunits are disposed, and each of the cache subunits in the cache cache includes multiple cache lines; a length of the cache line included in each cache subunit is different from a length of a cache line included in another cache subunit; each of the cache subunits is configured to store data at a corresponding level, the level is a strength level of spatial locality of the data, and a correspondence between the cache subunit and the level is: the length of the cache line included in the cache subunit is in a positive correlation with strength of spatial locality of the data; and
the apparatus includes:
a receiving unit, configured to receive an access request;
a first determining unit, configured to determine data that is to be accessed and that needs to be accessed according to the access request;
a judging unit, configured to determine a strength level of spatial locality of the data to be accessed; and
an allocation unit, configured to allocate, according to the strength level of the spatial locality of the data to be accessed, a cache subunit corresponding to the level to the data to be accessed.

With reference to the second aspect, in a first possible implementation manner, the judging unit includes:
a statistics collection module, configured to record addresses of data that is to be accessed and that needs to be accessed according to access requests, and collect statistics about access rules of the addresses of the data to be accessed, where the access rules includes a quantity of times or a probability that data of an address adjacent to the addresses is accessed according to another access request; and
a classification module, configured to classify, into levels according to the quantity of times or the probability that data of the address adjacent to the addresses of the data to be accessed is accessed by another access request, spatial locality of the data to be accessed.

With reference to the first possible implementation manner of the second aspect, in a second possible implementation manner, the apparatus further includes:
a calculation unit, configured to collect, within a preset time period, statistics about strength levels of spatial locality of data to be accessed, and calculate a first ratio, where the first ratio is used to represent a proportional relationship between or among the data to be accessed having different levels of spatial locality, and
the calculation unit is further configured to calculate a second ratio, where the second ratio is used to represent a proportional relationship between or among the cache subunits in the cache that include cache lines having different lengths; and
a first adjustment unit, configured to: when a difference between the first ratio and the second ratio that are obtained through calculation by the calculation unit is greater than a preset threshold, adjust a quantity of the cache lines in the cache subunit until the difference between the second ratio and the first ratio falls within a range of the preset threshold after the adjustment.

With reference to the second aspect, or the first possible implementation manner of the second aspect, or the second possible implementation manner of the second aspect, in a third possible implementation manner, the apparatus further includes:
a second determining unit, configured to determine, according to the strength level, which is obtained by the judging unit, of the spatial locality of the data to be accessed, a size of data to be temporarily stored;
a second adjustment unit, configured to adjust the length of the cache line in the cache subunit according to the size, which is determined by the second determining unit, of the data to be temporarily stored, and allocate an adjusted cache line to the data to be temporarily stored, where a length of the adjusted cache line matches the size of the data to be temporarily stored; and
an index bitmap processing unit, configured to establish and maintain an index bitmap based on a change in the length of the cache line in the cache subunit, where the index bitmap is used to indicate a tag domain and a data domain that are in the cache line.

With reference to the second aspect, in a fourth possible implementation manner, the apparatus further includes:
a division unit, configured to divide the cache by ways way and/or by sets set, to determine the multiple cache subunits, and set the length of the cache line in each cache subunit.

With reference to the third possible implementation manner of the second aspect, in a fifth possible implementation manner, the access request received by the receiving unit includes a physical address, the physical address is used to identify the data to be accessed, and the physical address includes a tag domain and a set domain that are of the data to be accessed; and
the apparatus further includes:
a sending unit, configured to send the access request to each of the cache subunits; and
a first search unit, configured to determine one or more cache lines that correspond to the set domain of the data to be accessed and that are in each of the cache subunits, compare tag domains of the one or more cache lines with the tag domain of the data to be accessed, and determine a cache line, which has a same tag domain as the data to be accessed, in the one or more cache lines as a cache line in which the data to be accessed is stored.

With reference to the third possible implementation manner of the second aspect, in a sixth possible implementation manner, the access request received by the receiving unit includes a physical address, the physical address is used to identify the data to be accessed, and the physical address includes a tag domain and a set domain that are of the data to be accessed; and
the apparatus further includes:
a list maintenance unit, configured to maintain a list for each cache subunit, where the list is used to record a characteristic value of data stored in each cache subunit;
a third determining unit, configured to: when the access request is received, determine a characteristic value of the data that is to be accessed and that needs to be accessed according to the access request;
a fourth determining unit, configured to traverse each list maintained by the list maintenance unit, and determine a cache subunit, which corresponds to a list in which the characteristic value of the data to be accessed is recorded, as a target cache subunit; and
a second search unit, configured to send the access request to the target cache subunit, determine one or more cache lines in the target cache subunit that correspond to the set domain of the data to be accessed, compare tag domains of the one or more cache lines with the tag domain of the data to be accessed, and determine a cache line, which has a same tag domain as the data to be accessed, in the one or more cache lines as a cache line in which the data to be accessed is stored.

By means of the cache management method and apparatus that are provided in the embodiments, on one hand, when spatial locality of data to be accessed is relatively strong, a cache line having a relatively large length is allocated to the data to be accessed. Because a probability that data of an address adjacent to the data to be accessed is accessed is relatively high when the spatial locality of the data to be accessed is relatively strong, and because the cache line allocated to the data to be accessed has a relatively large length, more data of addresses adjacent to the data to be accessed may be cached in the allocated cache line, so that in a process of writing the data from a memory to a cache, a quantity of times of read and write in the cache line can be reduced, a delay for accessing the data to be cached can be reduced, and transmission bandwidth between the memory and the cache can be reduced. On the other hand, when spatial locality of data to be accessed is relatively weak, a cache line having a relatively small length is allocated to the data to be accessed. Because a probability that data of an address adjacent to the data to be accessed is accessed is relatively low when the spatial locality of the data to be accessed is relatively weak, and because the cache line allocated to the data to be accessed has a relatively small length, data of only a small quantity of addresses adjacent to the data to be accessed is cached in the allocated cache line, so that invalid data in the cache line is reduced, and utilization of the cache line is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic hierarchy chart of a cache line in the prior art;
FIG. 2 is a schematic diagram of an organization manner of cache lines in a cache that have different lengths according to Embodiment 1 of the present invention;
FIG. 3 is a schematic flowchart of a cache management method according to Embodiment 1 of the present invention;
FIG. 4 is a schematic flowchart of a cache management method according to Embodiment 2 of the present invention;
FIG. 5 is a schematic diagram of a spatial locality analysis module according to Embodiment 2 of the present invention;
FIG. 6 is a schematic flowchart of a method for changing a capacity of each cache subunit in a cache in real time according to Embodiment 2 of the present invention;
FIG. 7 is a schematic diagram of a correspondence between an index bitmap and a cache according to Embodiment 2 of the present invention;
FIG. 8 is a schematic flowchart of a cache line search method according to Embodiment 2 of the present invention;
FIG. 9 is a schematic flowchart of another cache line search method according to Embodiment 2 of the present invention;
FIG. 10 is a schematic diagram of cache types according to Embodiment 2 of the present invention; and
FIG. 11 to FIG. 16 are structural block diagrams of a cache management apparatus according to Embodiment 3 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

### Embodiment 1

This embodiment provides a cache management method. In this embodiment, multiple cache subunits are disposed in a cache cache, and each of the cache subunits includes multiple cache lines; a length of the cache line included in each cache subunit is different from a length of a cache line included in another cache subunit; each of the cache subunits is configured to store data at a corresponding level, the level is a strength level of spatial locality of the data, and a correspondence between the cache subunit and the level is: the length of the cache line included in the cache subunit is in a positive correlation with strength of spatial locality of the data.

For ease of understanding, this embodiment provides a schematic diagram of an organization manner of cache lines in a cache that have different lengths for reference. As shown in FIG. 2, a cache subunit 201, a cache subunit 202, and a cache subunit 203 form a cache unit 200. The cache unit 200 may be a portion of the cache, or may be a complete cache. Each cache subunit includes multiple cache lines, and lengths of cache lines in different subunits are different. As shown in FIG. 2, a length of a cache line in the cache subunit 201 is less than a length of a cache line in the cache subunit 202, and the length of the cache line in the cache subunit 202 is less than a length of a cache line in the cache subunit 203.

It should be emphasized that the cache subunits shown in FIG. 2 are obtained after the cache is divided by ways (way). In an actual application, the cache may be further divided into multiple cache subunits by sets (set), or the cache is divided by sets in combination with by ways, and details are not described herein.

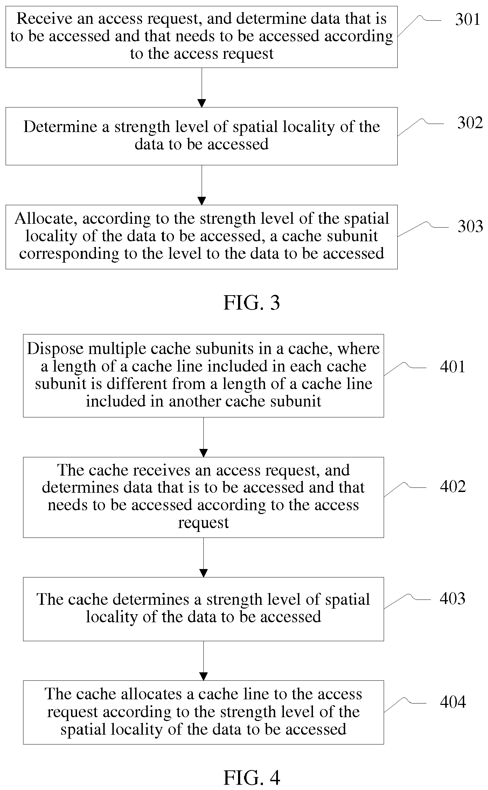

As shown in FIG. 3, the cache management method provided in this embodiment includes:
301: Receive an access request, and determine data that is to be accessed and that needs to be accessed according to the access request.

Specifically, the access request carries a physical address of the data to be accessed, and addressing may be performed in a memory according to the physical address, to determine the data that is to be accessed and that needs to be accessed according to the access request.

302: Determine a strength level of spatial locality of the data to be accessed.

Stronger spatial locality of the data to be accessed indicates a higher probability that data of an address adjacent to the data to be accessed is accessed. Lower spatial locality of the data to be accessed indicates a lower probability that the data of the address adjacent to the data to be accessed is accessed.

303: Allocate, according to the strength level of the spatial locality of the data to be accessed, a cache subunit corresponding to the level to the data to be accessed.

Specifically, by means of step 303, a cache line having a large length is allocated to data to be accessed that has strong spatial locality, and a cache line having a small length is allocated to data to be accessed that has low spatial locality.

For example, the multiple cache subunits include at least a first cache subunit and a second cache subunit, where a length of a cache line in the first cache subunit is greater than a length of a cache line in the second cache subunit. The access request received by the cache includes at least a first access request and a second access request, where first data to be accessed needs to be accessed according to the first access request, second data to be accessed needs to be accessed according to the second access request, and spatial locality of the first data to be accessed is higher than spatial locality of the second access request. According to step 303, the cache allocates an idle cache line in the first cache subunit to the first access request, and allocates an idle cache line in the second cache subunit to the second access request.

It should be noted that the method provided in this embodiment may be implemented by a function module, where the function module may be integrated in the cache, or the method provided in this embodiment may be implemented by an independent component disposed in a terminal device, but the present invention is not limited thereto.

By means of the cache management method provided in this embodiment, on one hand, when spatial locality of data to be accessed is relatively strong, a cache line having a relatively large length is allocated to the data to be accessed. Because a probability that data of an address adjacent to the data to be accessed is accessed is relatively high when the spatial locality of the data to be accessed is relatively strong, and because the cache line allocated to the data to be accessed has a relatively large length, more data of addresses adjacent to the data to be accessed may be cached in the allocated cache line, so that in a process of writing the data from a memory to a cache, a quantity of times of read and write in the cache line can be reduced, a delay for accessing the data to be cached can be reduced, and transmission bandwidth between the memory and the cache can be reduced. On the other hand, when spatial locality of data to be accessed is relatively weak, a cache line having a relatively small length is allocated to the data to be accessed. Because a probability that data of an address adjacent to the data to be accessed is accessed is relatively low when the spatial locality of the data to be accessed is relatively weak, and because the cache line allocated to the data to be accessed has a relatively small length, data of only a small quantity of addresses adjacent to the data to be accessed is cached in the allocated cache line, so that invalid data in the cache line is reduced, and utilization of the cache line is improved.

### Embodiment 2

Based on the embodiment shown in FIG. 3, this embodiment of the present invention further provides a cache management method. As shown in FIG. 4, the method provided in this embodiment includes:

401: Dispose multiple cache subunits in a cache, where each cache subunit includes multiple cache lines, and a length of the cache line included in each cache subunit is different from a length of a cache line included in another cache subunit.

Specifically, the cache may be divided by ways way, to determine the multiple cache subunits, and the length of the cache line in each cache subunit is set; and/or
the cache is divided by sets set, to determine the multiple cache subunits, and the length of the cache line in each cache subunit is set.

402: The cache receives an access request, and determines data that is to be accessed and that needs to be accessed according to the access request.

It should be noted that the method provided in this embodiment may be implemented by a function module, where the function module may be integrated in the cache, or the method provided in this embodiment may be implemented by disposing an independent component in a terminal device, but the present invention is not limited thereto.

For ease of understanding, this embodiment is described in a form of the function module, that is, a corresponding function module is disposed in the cache, and the function module is configured to manage the cache.

403: The cache determines a strength level of spatial locality of the data to be accessed.

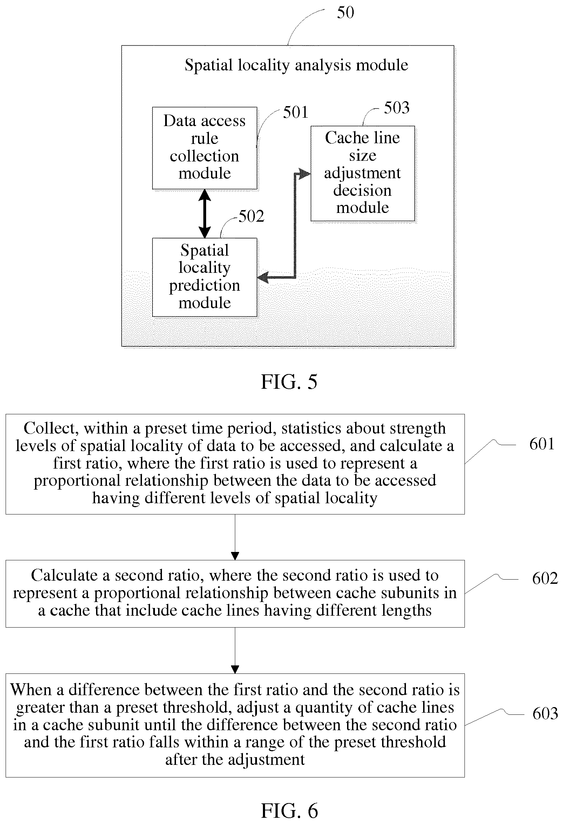

Specifically, a spatial locality analysis module may be disposed in the cache to determine the strength level of the spatial locality of the data to be accessed. As shown in FIG. 5, the spatial locality analysis module 50 includes: a data access rule collection module 501, a spatial locality prediction module 502, and a cache line size adjustment decision module 503. Step 403 is implemented by the spatial locality analysis module 50 by using the following steps:
S1: The data access rule collection module 501 records addresses of data that is to be accessed and that needs to be accessed according to access requests, and collects statistics about access rules of the addresses, which specifically includes: collecting statistics about a quantity of times or a probability that data of an address adjacent to the data that is to be accessed and that needs to be accessed by each access request is accessed according to another access request.
S2: The spatial locality prediction module 502 predicts, according to the access rule, the spatial locality of the data to be accessed, which specifically includes: classifying, into levels according to the quantity of times or the probability that data of the address adjacent to the data to be accessed is accessed by another access request, spatial locality of the data to be accessed.

For example, two determining thresholds T1 and T2 may be preset, where T1 is less than T2. When the quantity of times or the probability that the data of the address adjacent to the data to be accessed is accessed by the another access request is lower than T1, it is determined that the spatial locality of the data to be accessed is "low"; or when the quantity of times or the probability that the data of the address adjacent to the data to be accessed is accessed by the another access request reaches T1, but does not reach T2, it is determined that the spatial locality of the data to be accessed is "medium"; or when the quantity of times or the probability that the data of the address adjacent to the data to be accessed is accessed by the another access request reaches T2, it is determined that the spatial locality of the data to be accessed is "high".

404: The cache allocates a cache line to the access request according to the strength level of the spatial locality of the data to be accessed.

Specifically, a cache line having a large length is allocated to data to be accessed that has strong spatial locality, and a cache line having a small length is allocated to data to be accessed that has weak spatial locality. For example, the cache subunits are sorted according to a descending order of lengths of cache lines, which are sequentially: the cache subunit 203, the cache subunit 202, and the cache subunit 201. Based on an organization manner of cache lines shown in FIG. 2, when it is determined in step 403 that the spatial locality of the data to be accessed is "high", an idle cache line in the cache subunit 203 is allocated to the corresponding access request; or when it is determined that the spatial locality of the data to be accessed is "medium", an idle cache line in the cache subunit 202 is allocated to the corresponding access request; or when it is determined that the spatial locality of the data to be accessed is "low", an idle cache line in the cache subunit 201 is allocated to the corresponding access request.

By means of the foregoing steps, on one hand, when spatial locality of data to be accessed is relatively high, the data to be accessed and data of an address adjacent to the data to be accessed may be both determined as data to be cached (where higher spatial locality of the data to be accessed indicates larger data that is to be cached and that corresponds to the data to be accessed), and the data to be cached is cached in a pre-allocated cache line. Because the pre-allocated cache line has a relatively large length, in a process of writing, from a memory to a cache, the data to be cached, a quantity of times of read and write in the cache line can be reduced, so that a delay for accessing the data to be cached is reduced, and transmission bandwidth between the memory and the cache is reduced. On the other hand, when spatial locality of data to be accessed is relatively low, the data to be accessed may be determined as data to be cached (or the data to be accessed and a small quantity of data of addresses adjacent to the data to be accessed are both determined as the data to be cached), and the data to be cached is cached in a pre-allocated cache line allocated in advance. Because the pre-allocated cache line has a relatively small length, invalid data in the cache line can be reduced, and utilization of the cache line can be improved.

In this embodiment, the organization manner of the cache lines in the cache may be fixed, and capacities of the cache subunits 201 to 203 in FIG. 2 is fixed. By means of the method, utilization of a cache line can be improved, and relatively low complexity of a cache can be further ensured, facilitating implementation.

Optionally, in an optimized solution, capacities of the cache subunits in the cache may be further changed in real time according to strength levels of spatial locality of data to be accessed that corresponds to multiple access requests received within a preset time period, to further improve utilization of the cache line. Details are as follows, as shown in FIG. 6:
601: Collect, within a preset time period, statistics about strength levels of spatial locality of data to be accessed, and calculate a first ratio, where the first ratio is used to represent a proportional relationship between (or among) the data to be accessed having different levels of spatial locality.
602: Calculate a second ratio, where the second ratio is used to represent a proportional relationship between (or among) cache subunits in a cache that include cache lines having different lengths.
603: When a difference between the first ratio and the second ratio is greater than a preset threshold, adjust a quantity of cache lines in a cache subunit until the difference between the second ratio and the first ratio falls within a range of the preset threshold after the adjustment.

For ease of understanding, the foregoing steps 601 to 603 are illustrated based on the organization manner of cache lines shown in FIG. 2. For example, by means of step 601, it is determined that a proportional relationship between (or among) the capacities of the cache subunits in the cache is:
the cache subunit 201 : the cache subunit 202 : the cache subunit 203 = 1:1:1.

By means of step 602, it is determined that a proportional relationship between (or among) quantities of the access requests, which are received by the cache within the preset time period, having different spatial locality is:
access request having "high" spatial locality : access request having "medium" spatial locality : access request having "low" spatial locality = 1:2:3.

Based on the foregoing case, a proportion of each cache subunit in the entire cache may be adjusted by means of step 603, so that the proportional relationship between (or among) the capacities of the cache subunits in the cache is changed to:
the cache subunit 201 : the cache subunit 202 : the cache subunit 203 = 1:2:3.

It may be avoided that data having relatively strong(relatively weak) spatial locality is written to a cache line having a relatively small (relatively large) length through the foregoing processing, so that utilization of the cache line in each cache subunit is further improved.

The method shown in FIG. 6 may be implemented by using the cache line size adjustment decision module 503 in FIG. 5.

In another optimized solution, based on the cache management method shown in FIG. 4, after the spatial locality of the data to be accessed is determined by means of step 403, step 404 may be replaced with the following method:
S1: Determine, according to the strength level of the spatial locality of the data to be accessed, a size of data to be cached.

When the spatial locality of the data to be accessed is relatively strong, the data to be accessed and multiple pieces of data of addresses adjacent to the data to be accessed may be both determined as the data to be cached; or when the spatial locality of the data to be accessed is relatively weak, only the data to be accessed may be determined as the data to be cached (or the data to be accessed and a small quantity of data of addresses adjacent to the data to be accessed are determined together as the data to be cached).

S2: Adjust a length of a cache line in the cache subunit according to the size of the data to be cached, and allocate an adjusted cache line to the data to be cached, where a length of the adjusted cache line matches the size of the data to be cached.

S3: Establish and maintain an index bitmap based on a change in the length of the cache line in the cache subunit, where the index bitmap is used to indicate a tag domain and a data domain that are in the cache line.

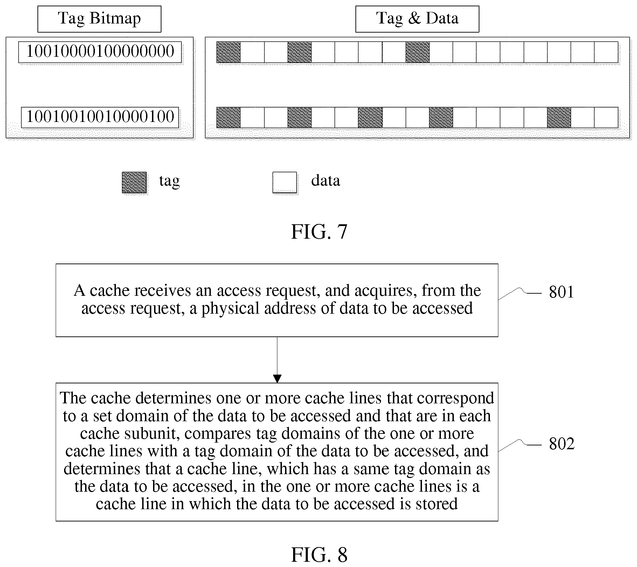

For ease of understanding, this embodiment provides a schematic diagram of an index bitmap, and a cache line corresponding to the index bitmap for reference. For example, as shown in FIG. 7, 0 in the index bitmap represents that a corresponding byte block is data; and 1 in the index bitmap represents that a corresponding byte block is a tag, where a start byte and an end byte that are of corresponding data to be cached are recorded in the tag. It should be noted that the index bitmap is configurable, and not only may be provided to an operating system or a user by using a register or a port or in another manner, but also may interact with a system or a user in another manner.

By means of the foregoing steps S1 to S3, the corresponding cache line can be allocated, according to the size of the data to be cached, to the data to be cached, so that a cache line resource can be fully used.

According to the foregoing description, a cache line can be allocated to an access request according to a strength level of spatial locality of data to be accessed. Based on a cache line allocation solution provided in this embodiment, this embodiment further provides a cache line search solution, and details are as follows:

In a solution 1, as shown in FIG. 8:
801: A cache receives an access request, and obtains, from the access request, a physical address of data to be accessed.

The access request includes the physical address, the physical address is used to identify the data to be accessed, and the physical address includes a tag domain and a set domain that are of the data to be accessed, where the tag domain is an identifier of the data to be accessed, and the set domain is used to represent a set (set) to which the data to be accessed belongs in the cache.

802: The cache determines one or more cache lines that correspond to a set domain of the data to be accessed and that are in each cache subunits, compares tag domains of the one or more cache lines with a tag domain of the data to be accessed, and determines a cache line, which has a same tag domain as the data to be accessed, in the one or more cache lines as a cache line in which the data to be accessed is stored.

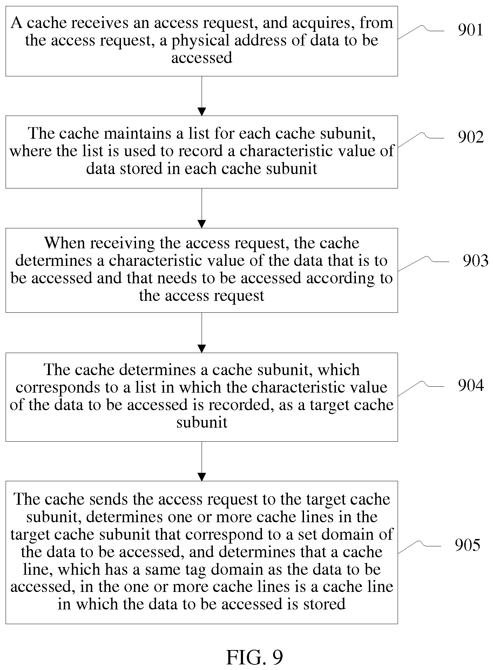

In a solution 2, as shown in FIG. 9:
901: A cache receives an access request, and obtains, from the access request, a physical address of data to be accessed.

The access request includes the physical address, the physical address is used to identify the data to be accessed, and the physical address includes a tag domain and a set domain that are of the data to be accessed, where the tag domain is an identifier of the data to be accessed, and the set domain is used to represent a set (set) to which the data to be accessed belongs in the cache.

902: The cache maintains a list for each cache subunit, where the list is used to record a characteristic value of data stored in each cache subunit.

The characteristic value is used to identify the data stored in the cache subunit, that is, there is a correspondence between the characteristic value and the data. For example, physical addresses of data may be calculated by using a hash function, and values obtained through calculation are determined as characteristic values corresponding to the data.

903: When receiving the access request, the cache determines a characteristic value of the data that is to be accessed and that needs to be accessed according to the access request.

904: The cache determines a cache subunit, which corresponds to a list in which the characteristic value of the data to be accessed is recorded, as a target cache subunit.

905: The cache sends the access request to the target cache subunit, determines one or more cache lines in the target cache subunit that correspond to a set domain of the data to be accessed, compares tag domains of the one or more cache lines with a tag domain of the data to be accessed, and determines a cache line, which has a same tag domain as the data to be accessed, in the one or more cache lines as a cache line in which the data to be accessed is stored.

A cache line search can be implemented by using the methods shown in FIG. 8 and FIG. 9.

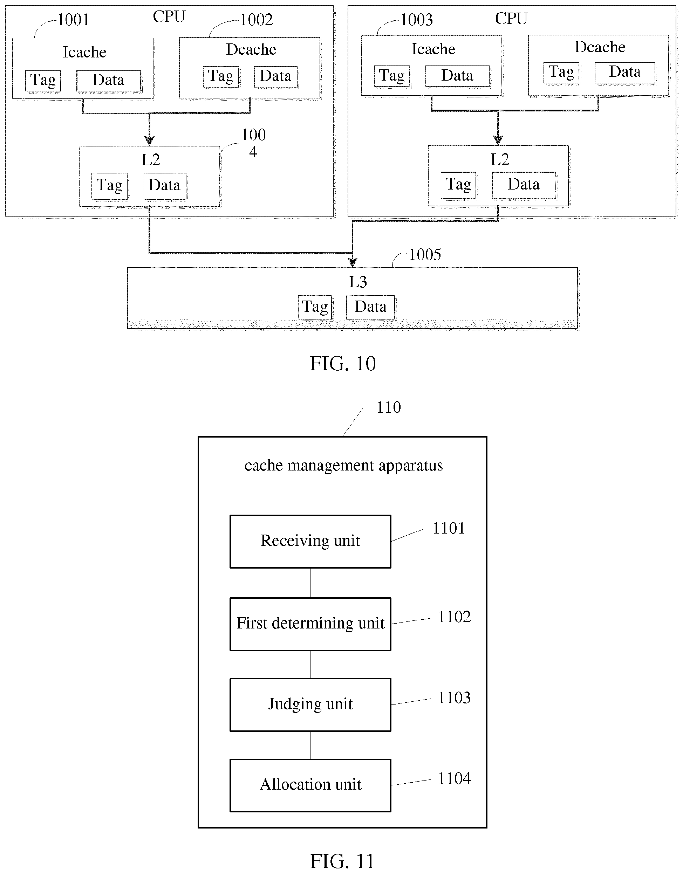

It should be noted that the cache management method provided in this embodiment is applicable to different types of caches. FIG. 10 provides an organization manner in which cache lines having different sizes are used in different types of caches. As shown in FIG. 10, different types of caches include the following multiple cases:
(1) caches having different functions in a same CPU, such as an instruction cache (Icache) 1001 and a data cache (Dcache) 1002;
(2) caches at different layers but in a same CPU, such as an instruction cache 1001 and an L2 cache 1004;
(3) caches at a same layer but in different CPUs, such as an instruction cache 1001 and an instruction cache 1003; and
(4) a private cache and a shared cache in different CPUs, such as an L3 cache 1005 and another cache unit.

The foregoing different types of caches may be configured by using same cache lines or different cache lines, and a specific configuration case may be set as required.

### Embodiment 3

This embodiment of the present invention provides a cache management apparatus, which can implement a cache management method provided in the present invention.

The apparatus provided in this embodiment is configured to manage a cache cache in which multiple cache subunits are disposed, and each of the cache subunits in the cache cache includes multiple cache lines; a length of the cache line included in each cache subunit is different from a length of a cache line included in another cache subunit; each of the cache subunits is configured to store data at a corresponding level, the level is a strength level of spatial locality of the data, and a correspondence between the cache subunit and the level is: the length of the cache line included in the cache subunit is in a positive correlation with strength of spatial locality of the data.

As shown in FIG. 11, the apparatus 110 provided in this embodiment includes:
a receiving unit 1101, configured to receive an access request;
a first determining unit 1102, configured to determine data that is to be accessed and that needs to be accessed according to the access request;
a judging unit 1103, configured to determine a strength level of spatial locality of the data to be accessed; and
an allocation unit 1104, configured to allocate, according to the strength level of the spatial locality of the data to be accessed, a cache subunit corresponding to the level to the data to be accessed.

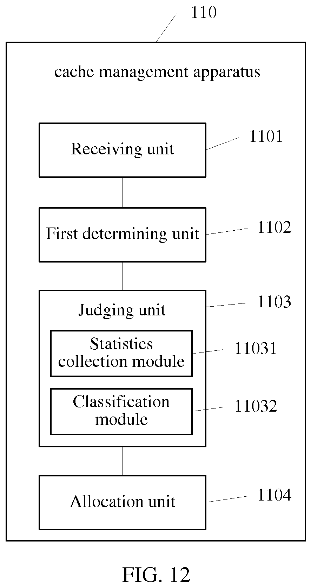

Further, as shown in FIG. 12, the judging unit 1103 includes:
a statistics collection module 11031, configured to record addresses of data that is to be accessed and that needs to be accessed according to access requests, and collect statistics about access rules of the addresses of the data to be accessed, where the access rules includes a quantity of times or a probability that data of an address adjacent to the addresses is accessed according to another access request; and
a classification module 11032, configured to classify, into levels according to the quantity of times or the probability that data of the address adjacent to the addresses of the data to be accessed is accessed by another access request, spatial locality of the data to be accessed.

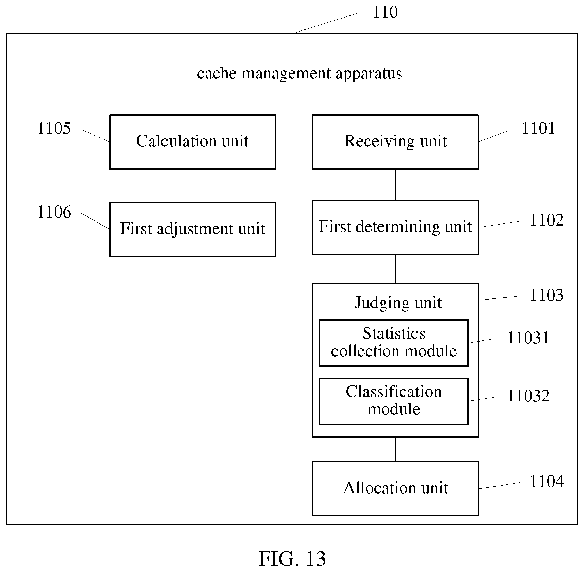

As shown in FIG. 13, the apparatus 110 further includes:
a calculation unit 1105, configured to collect, within a preset time period, statistics about strength levels of spatial locality of data to be accessed, and calculate a first ratio, where the first ratio is used to represent a proportional relationship between or among the data to be accessed having different levels of spatial locality, where
the calculation unit 1105 is further configured to calculate a second ratio, where the second ratio is used to represent a proportional relationship between or among the cache subunits in the cache that include cache lines having different lengths; and
a first adjustment unit 1106, configured to: when a difference between the first ratio and the second ratio that are obtained through calculation by the calculation unit 1105 is greater than a preset threshold, adjust a quantity of the cache lines in the cache subunit until the difference between the second ratio and the first ratio falls within a range of the preset threshold after the adjustment.

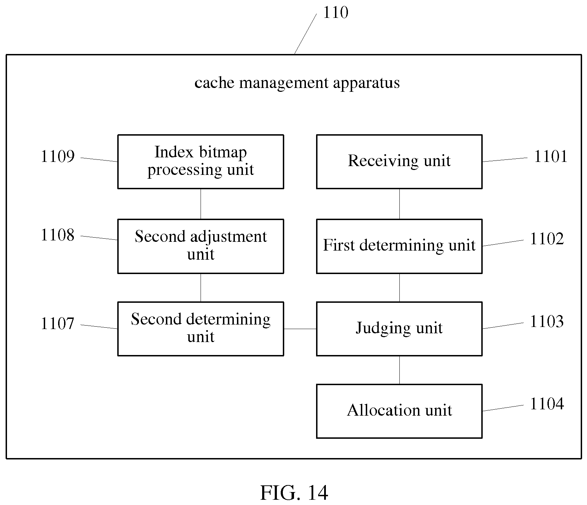

Based on FIG. 11 to FIG. 13, further, as shown in FIG. 14, the apparatus 110 further includes:
a second determining unit 1107, configured to determine, according to the strength level, which is obtained by the judging unit 1103, of the spatial locality of the data to be accessed, a size of data to be cached;
a second adjustment unit 1108, configured to adjust a length of a cache line in the cache subunit according to the size, which is determined by the second determining unit 1107, of the data to be cached, and allocate an adjusted cache line to the data to be cached, where a length of the adjusted cache line matches the size of the data to be cached; and
an index bitmap processing unit 1109, configured to establish and maintain an index bitmap based on a change in the length of the cache line in the cache subunit, where the index bitmap is used to indicate a tag domain and a data domain that are in the cache line.

It should be noted that for brevity of description, some units and modules added in FIG. 12 and FIG. 13 are not embodied in FIG. 14, but the apparatus in FIG. 14 may include some units and modules added in FIG. 12 and FIG. 13.

Optionally, the apparatus 110 may further include:
a division unit, configured to divide the cache by ways way and/or by sets set, to determine the multiple cache subunits, and set the length of the cache line in each cache subunit.

In FIG. 11 to FIG. 14, the access request received by the receiving unit 1101 includes a physical address, the physical address is used to identify the data to be accessed, and the physical address includes a tag domain and a set domain that are of the data to be accessed.

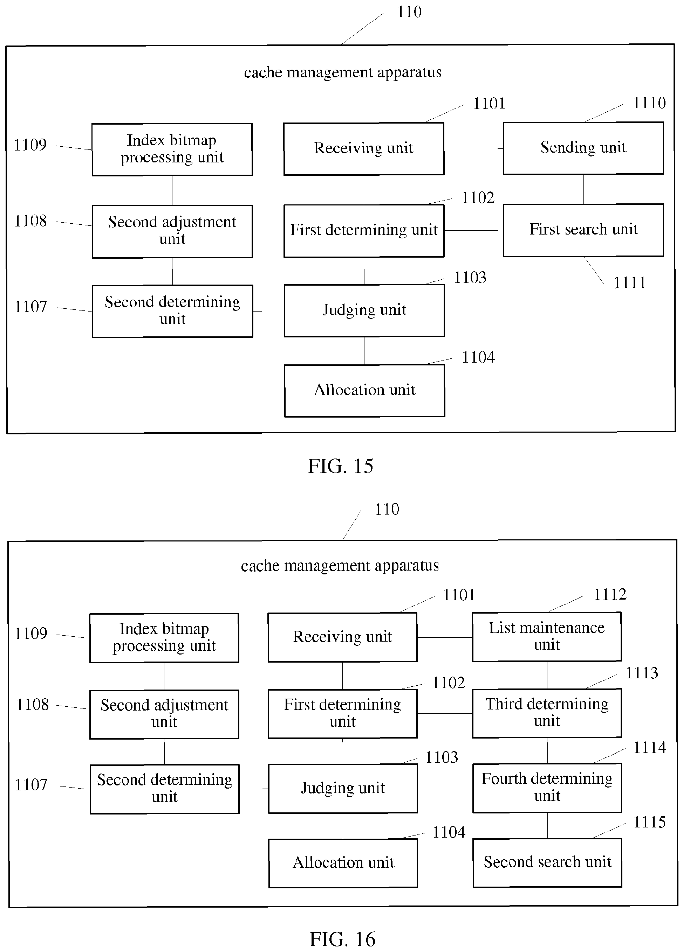

Based on FIG. 14, further, as shown in FIG. 15, the apparatus 110 further includes:
a sending unit 1110, configured to send the access request to each of the cache subunits; and
a first search unit 1111, configured to determine one or more cache lines that correspond to the set domain of the data to be accessed and that are in each of the cache subunits, compare tag domains of the one or more cache lines with the tag domain of the data to be accessed, and determine a cache line, which has a same tag domain as the data to be accessed, in the one or more cache lines as a cache line in which the data to be accessed is stored.

Based on FIG. 14, further, as shown in FIG. 16, the apparatus 110 further includes:
a list maintenance unit 1112, configured to maintain a list for each cache subunit, where the list is used to record a characteristic value of data stored in each cache subunit;
a third determining unit 1113, configured to: when the access request is received, determine a characteristic value of the data that is to be accessed and that needs to be accessed according to the access request;
a fourth determining unit 1114, configured to traverse each list maintained by the list maintenance unit, and determine a cache subunit, which corresponds to a list in which the characteristic value of the data to be accessed is recorded, as a target cache subunit; and
a second search unit 1115, configured to send the access request to the target cache subunit, determine one or more cache lines in the target cache subunit that correspond to the set domain of the data to be accessed, compare tag domains of the one or more cache lines with the tag domain of the data to be accessed, and determine a cache line, which has a same tag domain as the data to be accessed, in the one or more cache lines as a cache line in which the data to be accessed is stored.

By means of the cache management apparatus provided in this embodiment, on one hand, when spatial locality of data to be accessed is relatively strong, a cache line having a relatively large length is allocated to the data to be accessed. Because a probability that data of an address adjacent to the data to be accessed is accessed is relatively high when the spatial locality of the data to be accessed is relatively strong, and because the cache line allocated to the data to be accessed has a relatively large length, more data of addresses adjacent to the data to be accessed may be cached in the allocated cache line, so that in a process of writing the data from a memory to a cache, a quantity of times of read and write in the cache line can be reduced, a delay for accessing the data to be cached can be reduced, and transmission bandwidth between the memory and the cache can be reduced. On the other hand, when spatial locality of data to be accessed is relatively weak, a cache line having a relatively small length is allocated to the data to be accessed. Because a probability that data of an address adjacent to the data to be accessed is accessed is relatively low when the spatial locality of the data to be accessed is relatively weak, and because the cache line allocated to the data to be accessed has a relatively small length, data of only a small quantity of addresses adjacent to the data to be accessed is cached in the allocated cache line, so that invalid data in the cache line is reduced, and utilization of the cache line is improved.

Based on the foregoing descriptions of the implementation manners, a person skilled in the art may clearly understand that the present invention may be implemented by software in addition to necessary universal hardware or by hardware only. In most circumstances, the former is a preferred implementation manner. Based on such an understanding, the technical solutions of the present invention essentially or the part contributing to the prior art may be implemented in a form of a software product. The software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

The foregoing descriptions are merely specific implementation manners of the present invention, but are not intended to limit the protection scope of the present invention. Any variation or replacement readily figured out by a person skilled in the art within the technical scope of the claims shall fall within the protection scope of the present invention. Therefore, the protection scope of the present invention shall be subject to the protection scope of the claims.

## Claims

1. A cache management method, wherein multiple cache subunits (201, 202, 203) are disposed in a cache, and each of the cache subunits comprises multiple cache lines; a length of the cache line comprised in each cache subunit is different from a length of a cache line comprised in another cache subunit; each of the cache subunits is configured to store data at a corresponding level, the level is a strength level of spatial locality of the data, and a correspondence between the cache subunit and the level is: the length of the cache line comprised in the cache subunit is in a positive correlation with strength of spatial locality of the data; and the method comprises:
receiving (301) an access request, and determining data that is to be accessed and that needs to be accessed according to the access request;
determining (302) a strength level of spatial locality of the data to be accessed; wherein the determining a strength level of spatial locality of the data to be accessed comprises:
recording addresses of data that is to be accessed and that needs to be accessed according to access requests, and collecting statistics about access rules of the addresses of the data to be accessed, wherein the access rule comprises a quantity of times or a probability that data of an address adjacent to the addresses is accessed according to another access request; and
classifying, into levels according to the quantity of times or the probability that data of the address adjacent to the addresses of the data to be accessed is accessed by another access request, spatial locality of the data to be accessed;
and
allocating (303), according to the strength level of the spatial locality of the data to be accessed, a cache subunit corresponding to the level to the data to be accessed.

2. The method according to claim 1, wherein the method further comprises:
collecting (601), within a preset time period, statistics about strength levels of spatial locality of data to be accessed, and calculating a first ratio, wherein the first ratio is used to represent a proportional relationship between or among the data to be accessed having different levels of spatial locality;
calculating (602) a second ratio, wherein the second ratio is used to represent a proportional relationship between or among the cache subunits in the cache that comprise cache lines having different lengths; and
when a difference between the first ratio and the second ratio is greater than a preset threshold. adjusting (603) a quantity of the cache lines in the cache subunit until the difference between the second ratio and the first ratio falls within a range of the preset threshold after the adjustment.

3. The method according to claim 1 or 2, after the receiving (301) an access request, and determining data that is to be accessed and that needs to be accessed according to the access request, further comprising:
determining, according to the strength level of the spatial locality of the data to be accessed, a size of data to be cached;
adjusting the length of the cache line in the cache subunit according to the size of the data to be cached, and allocating an adjusted cache line to the data to be cached, wherein a length of the adjusted cache line matches the size of the data to be cached; and
establishing and maintaining an index bitmap based on a change in the length of the cache line in the cache subunit, wherein the index bitmap is used to indicate a tag domain and a data domain that are in the cache line.

4. The method according to claim 1, wherein that the multiple cache subunits are disposed in the cache comprises:
dividing the cache by ways and/or by sets, to determine the multiple cache subunits, and setting the length of the cache line in each cache subunit.

5. The method according to claim 3, wherein the access request comprises a physical address, the physical address is used to identify the data to be accessed, and the physical address comprises a tag domain and a set domain that are of the data to be accessed; and
the method further comprises:
sending the access request to each of the cache subunits; and
determining (802) one or more cache lines that correspond to the set domain of the data to be accessed and that are in each of the cache subunits, comparing tag domains of the one or more cache lines with the tag domain of the data to be accessed, and determining a cache line, which has a same tag domain as the data to be accessed, in the one or more cache lines as a cache line in which the data to be accessed is stored.

6. The method according to claim 3, wherein the access request comprises a physical address, the physical address is used to identify the data to be accessed, and the physical address comprises a tag domain and a set domain that are of the data to be accessed; and
the method further comprises:
maintaining (902) a list for each cache subunit, wherein the list is used to record a characteristic value of data stored in each cache subunit;
when the access request is received, determining (903) a characteristic value of the data that is to be accessed and that needs to be accessed according to the access request;
determining (904) a cache subunit, which corresponds to a list in which the characteristic value of the data to be accessed is recorded, as a target cache subunit; and
sending (905) the access request to the target cache subunit, determining one or more cache lines in the target cache subunit that correspond to the set domain of the data to be accessed, comparing tag domains of the one or more cache lines with the tag domain of the data to be accessed, and determining a cache line, which has a same tag domain as the data to be accessed, in the one or more cache lines as a cache line in which the data to be accessed is stored.

7. A cache management apparatus, wherein the apparatus is configured to manage a cache in which multiple cache subunits are disposed, and each of the cache subunits in the cache comprises multiple cache lines; a length of the cache line comprised in each cache subunit is different from a length of a cache line comprised in another cache subunit; each of the cache subunits is configured to store data at a corresponding level, the level is a strength level of spatial locality of the data, and a correspondence between the cache subunit and the level is: the length of the cache line comprised in the cache subunit is in a positive correlation with strength of spatial locality of the data; and
the apparatus comprises:
a receiving unit (1101), configured to receive an access request;
a first determining unit (1102), configured to determine data that is to be accessed and that needs to be accessed according to the access request;
a judging unit (1103), configured to determine a strength level of spatial locality of the data to be accessed; and
an allocation unit (1104), configured to allocate, according to the strength level of the spatial locality of the data to be accessed, a cache subunit corresponding to the level to the data to be accessed;
wherein the judging unit (1103) comprises:
a statistics collection module (11031), configured to record addresses of data that is to be accessed and that needs to be accessed according to access requests, and collect statistics about access rules of the addresses of the data to be accessed, wherein the access rule comprises a quantity of times or a probability that data of an address adjacent to the addresses is accessed according to another access request; and
a classification module (11032), configured to classify, into levels according to the quantity of times or the probability that data of the address adjacent to the addresses of the data to be accessed is accessed by another access request, spatial locality of the data to be accessed.

8. The apparatus according to claim 7, wherein the apparatus further comprises:
a calculation unit (1105), configured to collect, within a preset time period, statistics about strength levels of spatial locality of data to be accessed, and calculate a first ratio, wherein the first ratio is used to represent a proportional relationship between or among the data to be accessed having different levels of spatial locality, wherein
the calculation unit (1105) is further configured to calculate a second ratio, wherein the second ratio is used to represent a proportional relationship between or among the cache subunits in the cache that comprise cache lines having different lengths; and
a first adjustment unit (1106), configured to: when a difference between the first ratio and the second ratio that are obtained through calculation by the calculation unit is greater than a preset threshold, adjust a quantity of the cache lines in the cache subunit until the difference between the second ratio and the first ratio falls within a range of the preset threshold after the adjustment.

9. The apparatus according to claim 7 or 8, wherein the apparatus further comprises:
a second determining unit (1107), configured to determine, according to the strength level, which is obtained by the judging unit, of the spatial locality of the data to be accessed, a size of data to be cached;
a second adjustment unit (1108), configured to adjust the length of the cache line in the cache subunit according to the size, which is determined by the second determining unit, of the data to be cached, and allocate an adjusted cache line to the data to be cached, wherein a length of the adjusted cache line matches the size of the data to be cached; and
an index bitmap processing unit (1109), configured to establish and maintain an index bitmap based on a change in the length of the cache line in the cache subunit, wherein the index bitmap is used to indicate a tag domain and a data domain that are in the cache line.

10. The apparatus according to claim 7, wherein the apparatus further comprises:
a division unit, configured to divide the cache by ways and/or by sets, to determine the multiple cache subunits, and set the length of the cache line in each cache subunit.

11. The apparatus according to claim 9, wherein
the access request received by the receiving unit comprises a physical address, the physical address is used to identify the data to be accessed, and the physical address comprises a tag domain and a set domain that are of the data to be accessed; and
the apparatus further comprises:
a sending unit (1110), configured to send the access request to each of the cache subunits; and
a first search unit (1111), configured to determine one or more cache lines that correspond to the set domain of the data to be accessed and that are in each of the cache subunits, compare tag domains of the one or more cache lines with the tag domain of the data to be accessed, and determine a cache line, which has a same tag domain as the data to be accessed, in the one or more cache lines as a cache line in which the data to be accessed is stored.

12. The apparatus according to claim 9, wherein
the access request received by the receiving unit comprises a physical address, the physical address is used to identify the data to be accessed, and the physical address comprises a tag domain and a set domain that are of the data to be accessed; and
the apparatus further comprises:
a list maintenance unit (1112), configured to maintain a list for each cache subunit, wherein the list is used to record a characteristic value of data stored in each cache subunit;
a third determining unit (1113), configured to: when the access request is received, determine a characteristic value of the data that is to be accessed and that needs to be accessed according to the access request;
a fourth determining unit (1114), configured to traverse each list maintained by the list maintenance unit, and determine a cache subunit, which corresponds to a list in which the characteristic value of the data to be accessed is recorded, as a target cache subunit; and
a second search unit (1115), configured to send the access request to the target cache subunit, determine one or more cache lines in the target cache subunit that correspond to the set domain of the data to be accessed, compare tag domains of the one or more cache lines with the tag domain of the data to be accessed, and determine a cache line, which has a same tag domain as the data to be accessed, in the one or more cache lines as a cache line in which the data to be accessed is stored,

## Patentansprüche

1. Cache-Verwaltungsverfahren, wobei mehrere Cache-Untereinheiten (201, 202, 203) in einem Cache angeordnet sind und jede der Cache-Untereinheiten mehrere Cache-Zeilen umfasst; sich eine Länge der in jeder Cache-Untereinheit umfassten Cache-Zeile von einer Länge einer in einer anderen Cache-Untereinheit umfassten Cache-Zeile unterscheidet; jede der Cache-Untereinheiten konfiguriert ist, Daten auf einer entsprechenden Ebene zu speichern, wobei die Ebene ein Stabilitätsniveau einer räumlichen Lokalität der Daten ist und eine Entsprechung zwischen der Cache-Untereinheit und der Ebene in Folgendem besteht: die Länge der in der Cache-Untereinheit umfassten Cache-Zeile steht in positiver Korrelation mit der Stabilität der räumlichen Lokalität der Daten; und das Verfahren Folgendes umfasst:
Empfangen (301) einer Zugriffsanforderung und Bestimmen von Daten, auf die zugegriffen werden soll und auf die gemäß der Zugriffsanforderung zugegriffen werden muss;
Bestimmen (302) eines Stabilitätsniveaus der räumlichen Lokalität der Daten, auf die zugegriffen werden soll; wobei das Bestimmen eines Stabilitätsniveaus der räumlichen Lokalität der Daten, auf die zugegriffen werden soll, Folgendes umfasst:
Aufzeichnen von Adressen von Daten, auf die zugegriffen werden soll und auf die gemäß von Zugriffsanforderungen zugegriffen werden muss, und Sammeln von Statistiken über Zugriffsregeln für die Adressen der Daten, auf die zugegriffen werden soll, wobei die Zugriffsregel eine Anzahl von Malen oder eine Wahrscheinlichkeit umfasst, dass auf Daten einer Adresse, welche an die Adressen angrenzt, gemäß einer anderen Zugriffsanforderung zugegriffen wird; und
Klassifizieren der räumlichen Lokalität der Daten, auf die zugegriffen werden soll, in Ebenen gemäß der Anzahl von Malen oder der Wahrscheinlichkeit, dass auf Daten der Adresse, welche an die Adressen der Daten angrenzt, auf die zugegriffen werden soll, gemäß einer anderen Zugriffsanforderung zugegriffen werden soll;
und
Zuordnen (303), gemäß dem Stabilitätsniveau der räumlichen Lokalität der Daten, auf die zugegriffen werden soll, einer Cache-Untereinheit, die der Ebene entspricht, zu den Daten, auf die zugegriffen werden soll.

2. Verfahren nach Anspruch 1, wobei das Verfahren ferner Folgendes umfasst:
Sammeln (601), innerhalb eines voreingestellten Zeitraums, von Statistiken über Stabilitätsniveaus der räumlichen Lokalität von Daten, auf die zugegriffen werden soll, und Berechnen eines ersten Verhältnisses, wobei das erste Verhältnis verwendet wird, um eine proportionale Beziehung zwischen den oder innerhalb der Daten, auf die zugegriffen werden soll, die unterschiedliche Ebenen der räumlichen Lokalität aufweisen, darzustellen;
Berechnen (602) eines zweiten Verhältnisses, wobei das zweite Verhältnis verwendet wird, um eine proportionale Beziehung zwischen den oder innerhalb der Cache-Untereinheiten in dem Cache darzustellen, die Cache-Zeilen umfassen, welche unterschiedliche Längen aufweisen; und
wenn ein Unterschied zwischen dem ersten Verhältnis und dem zweiten Verhältnis größer als ein voreingestellter Schwellenwert ist,
Anpassen (603) einer Menge der Cache-Zeilen in der Cache-Untereinheit, bis der Unterschied zwischen dem zweiten Verhältnis und dem ersten Verhältnis nach der Anpassung in einen Bereich des voreingestellten Schwellenwerts fällt.

3. Verfahren nach Anspruch 1 oder 2, das nach dem Empfangen (301) einer Zugriffsanforderung und dem Bestimmen der Daten, auf die zugegriffen werden soll und auf die gemäß der Zugriffsanforderung zugegriffen werden muss, ferner Folgendes umfasst:
Bestimmen, gemäß dem Stabilitätsniveau der räumlichen Lokalität der Daten, auf die zugegriffen werden soll, einer Größe der Daten, die zwischengespeichert werden sollen;
Anpassen der Länge der Cache-Zeile in der Cache-Untereinheit gemäß der Größe der Daten, die zwischengespeichert werden sollen, und Zuordnen einer angepassten Cache-Zeile zu den Daten, die zwischengespeichert werden sollen, wobei eine Länge der angepassten Cache-Zeile mit der Größe der Daten, die zwischengespeichert werden sollen, übereinstimmt; und
Erstellen und Führen einer Index-Bitmap basierend auf einer Änderung der Länge der Cache-Zeile in der Cache-Untereinheit, wobei die Index-Bitmap verwendet wird, um einen Tag-Bereich und einen Daten-Bereich anzugeben, die sich in der Cache-Zeile befinden.

4. Verfahren nach Anspruch 1, wobei die Tatsache, dass die mehreren Cache-Untereinheiten in dem Cache angeordnet sind, umfasst:
Unterteilen des Cache nach Arten und/oder nach Sätzen, um die mehreren Cache-Untereinheiten zu bestimmen, und Einstellen der Länge der Cache-Zeile in jeder Cache-Untereinheit.

5. Verfahren nach Anspruch 3, wobei die Zugriffsanforderung eine physische Adresse umfasst, wobei die physische Adresse verwendet wird, um die Daten, auf die zugegriffen werden soll, zu identifizieren, und die physische Adresse einen Tag-Bereich und einen Satz-Bereich umfasst, die zu den Daten gehören, auf die zugegriffen werden soll; und
wobei das Verfahren ferner umfasst:
Senden der Zugriffsanforderung an jede der Cache-Untereinheiten; und
Bestimmen (802) von einer oder mehreren Cache-Zeilen, die dem Satz-Bereich der Daten entsprechen, auf die zugegriffen werden soll, und die sich in jeder der Cache-Untereinheiten befinden, Vergleichen von Tag-Bereichen der einen oder der mehreren Cache-Zeilen mit dem Tag-Bereich der Daten, auf die zugegriffen werden soll, und Bestimmen einer Cache-Zeile, die einen gleichen Tag-Bereich aufweist wie die Daten, auf die zugegriffen werden soll, in der einen oder den mehreren Cache-Zeilen als eine Cache-Zeile, in welcher die Daten, auf die zugegriffen werden soll, gespeichert sind.

6. Verfahren nach Anspruch 3, wobei die Zugriffsanforderung eine physische Adresse umfasst, die physische Adresse verwendet wird, um die Daten zu identifizieren, auf die zugegriffen werden soll, und die physische Adresse einen Tag-Bereich und einen Satz-Bereich umfasst, die zu den Daten gehören, auf die zugegriffen werden soll; und das Verfahren ferner Folgendes umfasst:
Führen (902) einer Liste für jede Cache-Untereinheit, wobei die Liste zum Aufzeichnen eines charakteristischen Werts der in jeder Cache-Untereinheit gespeicherten Daten verwendet wird;
wenn die Zugriffsanforderung empfangen wird, Bestimmen (903) eines charakteristischen Werts der Daten, auf die zugegriffen werden soll und auf die gemäß der Zugriffsanforderung zugegriffen werden muss;
Bestimmen (904) einer Cache-Untereinheit, die einer Liste entspricht, in welcher der charakteristische Wert der Daten, auf die zugegriffen werden soll, aufgezeichnet ist, als eine Ziel-Cache-Untereinheit; und
Senden (905) der Zugriffsanforderung an die Ziel-Cache-Untereinheit, Bestimmen von einer oder mehreren Cache-Zeilen in der Ziel-Cache-Untereinheit, die dem Satz-Bereich der Daten entsprechen, auf die zugegriffen werden soll, Vergleichen von Tag-Bereichen der einen oder der mehreren Cache-Zeilen mit dem Tag-Bereich der Daten, auf die zugegriffen werden soll, und Bestimmen einer Cache-Zeile, welche einen gleichen Tag-Bereich aufweist wie die Daten, auf die zugegriffen werden soll, in der einen oder den mehreren Cache-Zeilen als eine Cache-Zeile, in welcher die Daten, auf die zugegriffen werden soll, gespeichert sind.

7. Cache-Verwaltungseinrichtung, wobei die Einrichtung konfiguriert ist, einen Cache zu verwalten, in welchem mehrere Cache-Untereinheiten angeordnet sind, und wobei jede der Cache-Untereinheiten in dem Cache mehrere Cache-Zeilen umfasst; eine Länge der in jeder Cache-Untereinheit umfassten Cache-Zeile von einer Länge einer in einer anderen Cache-Untereinheit umfassten Cache-Zeile verschieden ist; jede der Cache-Untereinheiten konfiguriert ist, Daten auf einer entsprechenden Ebene zu speichern, wobei die Ebene ein Stabilitätsniveau der räumlichen Lokalität der Daten ist und eine Entsprechung zwischen der Cache-Untereinheit und der Ebene in Folgendem besteht: die Länge der in der Cache-Untereinheit umfassten Cache-Zeile steht in positiver Korrelation mit der Stabilität der räumlichen Lokalität der Daten; und
die Einrichtung Folgendes umfasst:
eine Empfangseinheit (1101), konfiguriert zum Empfangen einer Zugriffsanforderung;
eine erste Bestimmungseinheit (1102), konfiguriert zum Bestimmen von Daten, auf die zugegriffen werden soll und auf die gemäß der Zugriffsanforderung zugegriffen werden muss;
eine Bewertungseinheit (1103), konfiguriert zum Bestimmen eines Stabilitätsniveaus der räumlichen Lokalität der Daten, auf die zugegriffen werden soll; und
eine Zuordnungseinheit (1104), konfiguriert zum Zuordnen, gemäß dem Stabilitätsniveau der räumlichen Lokalität der Daten, auf die zugegriffen werden soll, einer Cache-Untereinheit, die der Ebene entspricht, zu den Daten, auf die zugegriffen werden soll;
wobei die Bewertungseinheit (1103) Folgendes umfasst:
ein Statistikensammlungsmodul (11031), konfiguriert zum Aufzeichnen von Adressen von Daten, auf die zugegriffen werden soll und auf die gemäß Zugriffsanforderungen zugegriffen werden muss, und zum Sammeln von Statistiken über Zugriffsregeln der Adressen der Daten, auf die zugegriffen werden soll, wobei die Zugriffsregel eine Anzahl von Malen oder eine Wahrscheinlichkeit umfasst, dass auf Daten einer Adresse, die angrenzend an die Adressen liegt, gemäß einer anderen Zugriffsanforderung zugegriffen wird; und
ein Klassifizierungsmodul (11032), konfiguriert zum Klassifizieren der räumlichen Lokalität der Daten, auf die zugegriffen werden soll, in Ebenen gemäß der Anzahl von Malen oder der Wahrscheinlichkeit, dass auf Daten der Adresse, die angrenzend an die Adressen der Daten liegt, auf die zugegriffen werden soll, durch eine andere Zugriffsanforderung zugegriffen wird.

8. Einrichtung nach Anspruch 7, wobei die Einrichtung ferner Folgendes umfasst:
eine Berechnungseinheit (1105), konfiguriert zum Sammeln, innerhalb eines voreingestellten Zeitraums, von Statistiken über Stabilitätsniveaus der räumlichen Lokalität von Daten, auf die zugegriffen werden soll, und Berechnen eines ersten Verhältnisses, wobei das erste Verhältnis zum Darstellen einer proportionalen Beziehung zwischen den oder innerhalb der Daten, auf die zugegriffen werden soll, welche unterschiedliche Niveaus der räumlichen Lokalität aufweisen, verwendet wird, wobei
die Berechnungseinheit (1105) ferner konfiguriert ist zum Berechnen eines zweiten Verhältnisses, wobei das zweite Verhältnis zum Darstellen einer proportionalen Beziehung zwischen den oder innerhalb der Cache-Untereinheiten in dem Cache, die Cache-Zeilen umfassen, welche unterschiedliche Längen aufweisen, verwendet wird; und
eine erste Anpassungseinheit (1106), konfiguriert zu Folgendem: wenn ein Unterschied zwischen dem ersten Verhältnis und dem zweiten Verhältnis, die durch Berechnung durch die Berechnungseinheit erhalten wurden, größer als ein voreingestellter Schwellenwert ist, Anpassen einer Menge der Cache-Zeilen in der Cache-Untereinheit, bis der Unterschied zwischen dem zweiten Verhältnis und dem ersten Verhältnis in einen Bereich des voreingestellten Schwellenwerts nach der Anpassung fällt.

9. Einrichtung nach Anspruch 7 oder 8, wobei die Einrichtung ferner Folgendes umfasst:
eine zweite Bestimmungseinheit (1107), konfiguriert zum Bestimmen einer Größe der Daten, die zwischengespeichert werden sollen, gemäß dem Stabilitätsniveau, das durch die Bewertungseinheit erhalten wird, der räumlichen Lokalität der Daten, auf die zugegriffen werden soll;
eine zweite Anpassungseinheit (1108), konfiguriert zum Anpassen der Länge der Cache-Zeile in der Cache-Untereinheit gemäß der Größe der Daten, die zwischengespeichert werden sollen, die von der zweiten Bestimmungseinheit bestimmt wird, und Zuordnen einer angepassten Cache-Zeile zu den Daten, die zwischengespeichert werden sollen, wobei eine Länge der angepassten Cache-Zeile mit der Größe der Daten, die zwischengespeichert werden sollen, übereinstimmt; und
eine Index-Bitmap-Verarbeitungseinheit (1109), konfiguriert zum Erstellen und Führen einer Index-Bitmap basierend auf einer Änderung der Länge der Cache-Zeile in der Cache-Untereinheit, wobei die Index-Bitmap verwendet wird, um einen Tag-Bereich und ein Daten-Bereich, die sich in der Cache-Zeile befinden, anzugeben.

10. Einrichtung nach Anspruch 7, wobei die Einrichtung ferner umfasst:
eine Unterteilungseinheit, konfiguriert zum Unterteilen des Cache nach Arten und/oder nach Sätzen, um die mehreren Cache-Untereinheiten zu bestimmen und die Länge der Cache-Zeile in jeder Cache-Untereinheit einzustellen.

11. Einrichtung nach Anspruch 9, wobei
die von der Empfangseinheit empfangene Zugriffsanforderung eine physische Adresse umfasst, wobei die physische Adresse zum Identifizieren der Daten, auf die zugegriffen werden soll, verwendet wird und die physische Adresse einen Tag-Bereich und einen Satz-Bereich, die zu den Daten gehören, auf die zugegriffen werden soll, umfasst; und
die Einrichtung ferner Folgendes umfasst:
eine Sendeeinheit (1110), konfiguriert zum Senden der Zugriffsanforderung an jede der Cache-Untereinheiten; und
eine erste Sucheinheit (1111), konfiguriert zum Bestimmen von einer oder mehreren Cache-Zeilen, die dem Satz-Bereich der Daten entsprechen, auf die zugegriffen werden soll und die sich in jeder der Cache-Untereinheiten befinden, Vergleichen der Tag-Bereiche der einen oder der mehreren Cache-Zeilen mit dem Tag-Bereich der Daten, auf die zugegriffen werden soll, und Bestimmen von einer Cache-Zeile, welche einen gleichen Tag-Bereich aufweist wie die Daten, auf die zugegriffen werden soll, in der einen oder den mehreren Cache-Zeilen als eine Cache-Zeile, in der die Daten, auf die zugegriffen werden soll, gespeichert sind.

12. Einrichtung nach Anspruch 9, wobei
die von der Empfangseinheit empfangene Zugriffsanforderung eine physische Adresse umfasst, wobei die physische Adresse zum Identifizieren der Daten verwendet wird, auf die zugegriffen werden soll, und die physische Adresse einen Tag-Bereich und einen Satz-Bereich umfasst, die zu den Daten gehören, auf die zugegriffen werden soll; und
die Einrichtung ferner Folgendes umfasst:
eine Listenführungseinheit (1112), konfiguriert zum Führen einer Liste für jede Cache-Untereinheit, wobei die Liste zum Aufzeichnen eines charakteristischen Werts von Daten verwendet wird, die in jeder Cache-Untereinheit gespeichert sind;
eine dritte Bestimmungseinheit (1113), zu Folgendem konfiguriert: wenn die Zugriffsanforderung empfangen wird, Bestimmen eines charakteristischen Werts der Daten, auf die zugegriffen werden soll und auf die gemäß der Zugriffsanforderung zugegriffen werden muss;
eine vierte Bestimmungseinheit (1114), konfiguriert zum Durchsuchen jeder Liste, die von der Listenführungseinheit geführt wird, und zum Bestimmen einer Cache-Untereinheit, die einer Liste entspricht, in welcher der charakteristische Wert der Daten, auf die zugegriffen werden soll, aufgezeichnet ist, als einer Ziel-Cache-Untereinheit; und
eine zweite Sucheinheit (1115), konfiguriert zum Senden der Zugriffsanforderung an die Ziel-Cache-Untereinheit,
Bestimmen von einer oder mehreren Cache-Zeilen in der Ziel-Cache-Untereinheit, die dem Satz-Bereich der Daten entspricht, auf die zugegriffen werden soll, Vergleichen von Tag-Bereichen der einen oder der mehreren Cache-Zeilen mit dem Tag-Bereich der Daten, auf die zugegriffen werden soll, und Bestimmen einer Cache-Zeile, die einen gleichen Tag-Bereich aufweist wie die Daten, auf die zugegriffen werden soll, in der einen oder den mehreren Cache-Zeilen als eine Cache-Zeile, in der Daten, auf die zugegriffen werden soll, gespeichert sind.

## Revendications

1. Procédé de gestion de cache, dans lequel de multiples sous-unités de cache (201, 202, 203) sont disposées dans un cache, et chacune des sous-unités de cache comprend de multiples lignes de cache ; une longueur de la ligne de cache comprise dans chaque sous-unité de cache est différente d'une longueur d'une ligne de cache comprise dans une autre sous-unité de cache ; chacune des sous-unités de cache est configurée pour stocker des données à un niveau correspondant, le niveau est un niveau d'intensité d'un emplacement spatial des données, et une correspondance entre la sous-unité de cache et le niveau est comme suit : la longueur de la ligne de cache comprise dans la sous-unité de cache est en corrélation positive avec l'intensité d'emplacement spatial des données ; et le procédé comprend :
la réception (301) d'une demande d'accès, et la détermination de données devant faire l'objet d'un accès et qui nécessitent de faire l'objet d'un accès conformément à la demande d'accès ;
la détermination (302) d'un niveau d'intensité d'emplacement spatial des données devant faire l'objet d'un accès ; dans lequel la détermination d'un niveau d'intensité d'emplacement spatial des données devant faire l'objet d'un accès comprend :
l'enregistrement d'adresses de données devant faire l'objet d'un accès et qui nécessitent de faire l'objet d'un accès conformément aux demandes d'accès, et le recueil de statistiques à propos des règles d'accès des adresses des données devant faire l'objet d'un accès, dans lequel les règles d'accès comprennent une quantité de fois ou une probabilité que les données d'une adresse adjacente aux adresses fassent l'objet d'un accès conformément à une autre demande d'accès ; et
la classification, en niveaux en fonction de la quantité de fois ou de la probabilité que les données d'une adresse adjacente aux adresses des données devant faire l'objet d'un accès fassent l'objet d'un accès par une autre demande d'accès, de l'emplacement spatial des données devant faire l'objet d'un accès ; et
l'attribution (303), en fonction du niveau d'intensité de l'emplacement spatial des données devant faire l'objet d'un accès, d'une sous-unité de cache correspondant au niveau des données devant faire l'objet d'un accès.

2. Procédé selon la revendication 1, dans lequel le procédé comprend en outre :
le recueil (601), pendant une période temporelle prédéfinie, de statistiques à propos des niveaux d'intensité d'emplacement spatial des données devant faire l'objet d'un accès, et le calcul d'un premier rapport, dans lequel le premier rapport est utilisé pour représenter une relation proportionnelle entre ou parmi les données devant faire l'objet d'un accès présentant différents niveaux d'emplacement spatial ;
le calcul (602) d'un second rapport, dans lequel le second rapport est utilisé pour représenter une relation proportionnelle entre ou parmi les sous-unités de cache qui comprennent des lignes de cache présentant des longueurs différentes ; et
lorsqu'une différence entre le premier rapport et le second rapport est supérieure à un seuil prédéfini, l'ajustement (603) d'une quantité des lignes de cache dans la sous-unité de cache jusqu'à ce que la différence entre le second rapport et le premier rapport tombe dans une plage du seuil prédéfini après l'ajustement.

3. Procédé selon la revendication 1 ou 2, comprenant en outre, après la réception (301) d'une demande d'accès et la détermination des données devant faire l'objet d'un accès et qui nécessitent de faire l'objet d'un accès conformément à la demande d'accès :
la détermination, en fonction du niveau d'intensité de l'emplacement spatial des données devant faire l'objet d'un accès, d'une taille des données à mettre en cache ;
l'ajustement de la longueur de la ligne de cache dans la sous-unité de cache en fonction de la taille des données à mettre en cache, et l'attribution d'une ligne de cache ajustée aux données à mettre en cache, dans lequel une longueur de la ligne de cache ajustée correspond à la taille des données à mettre en cache ; et
l'établissement et la tenue à jour d'un index binaire sur la base d'un changement de la longueur de la ligne de cache dans la sous-unité de cache, dans lequel l'index binaire est utilisé pour indiquer un domaine signalé et un domaine de données qui se trouvent dans la ligne de cache.

4. Procédé selon la revendication 1, dans lequel la disposition de multiples sous-unités de cache dans le cache comprend :
la division du cache en voies et/ou en ensembles, pour déterminer les multiples sous-unités de cache, et la définition de la longueur de la ligne de cache dans chaque sous-unité de cache.

5. Procédé selon la revendication 3, dans lequel la demande d'accès comprend une adresse physique, l'adresse physique est utilisée pour identifier les données devant faire l'objet d'un accès, et l'adresse physique comprend un domaine signalé et un domaine défini qui sont ceux des données devant faire l'objet d'un accès ; et
le procédé comprend en outre :
l'envoi de la demande d'accès à chacune des sous-unités de cache ; et
la détermination (802) d'une ou plusieurs lignes de cache qui correspondent au domaine défini des données devant faire l'objet d'un accès et qui se trouvent dans chacune des sous-unités de cache, la comparaison des domaines signalés de la ou des lignes de cache avec le domaine signalé des données devant faire l'objet d'un accès, et la détermination d'une ligne de cache qui a le même domaine signalé que les données devant faire l'objet d'un accès, dans la ou les lignes de cache, comme ligne de cache dans laquelle les données devant faire l'objet d'un accès sont stockées.

6. Procédé selon la revendication 3, dans lequel la demande d'accès comprend une adresse physique, l'adresse physique est utilisée pour identifier les données devant faire l'objet d'un accès, et l'adresse physique comprend un domaine signalé et un domaine défini qui sont ceux des données devant faire l'objet d'un accès ; et
le procédé comprend en outre :
la tenue à jour (902) d'une liste pour chaque sous-unité de cache, dans lequel la liste est utilisée pour enregistrer une valeur caractéristique des données stockées dans chaque sous-unité de cache ;
lorsque la demande d'accès est reçue, la détermination (903) d'une valeur caractéristique des données devant faire l'objet d'un accès et qui nécessitent de faire l'objet d'un accès conformément à la demande d'accès ;
la détermination (904) d'une sous-unité de cache qui correspond à une liste dans laquelle est enregistrée la valeur caractéristique des données devant faire l'objet d'un accès, comme sous-unité de cache cible ; et
l'envoi (905) de la demande d'accès à la sous-unité de cache cible, la détermination d'une ou plusieurs lignes de cache dans la sous-unité de cache cible qui correspondent au domaine défini des données devant faire l'objet d'un accès, la comparaison des domaines signalés de la ou des lignes de cache avec le domaine signalé des données devant faire l'objet d'un accès, et la détermination d'une ligne de cache qui a le même domaine signalé que les données devant faire l'objet d'un accès, dans la ou les lignes de cache, comme ligne de cache dans laquelle les données devant faire l'objet d'un accès sont stockées.

7. Appareil de gestion de cache, dans lequel l'appareil est configuré pour gérer un cache dans lequel de multiples sous-unités de cache sont disposées, et chacune des sous-unités de cache dans le cache comprend de multiples lignes de cache ; une longueur de la ligne de cache comprise dans chaque sous-unité de cache est différente d'une longueur d'une ligne de cache comprise dans une autre sous-unité de cache ; chacune des sous-unités de cache est configurée pour stocker des données à un niveau correspondant, le niveau est un niveau d'intensité d'un emplacement spatial des données, et une correspondance entre la sous-unité de cache et le niveau est comme suit : la longueur de la ligne de cache comprise dans la sous-unité de cache est en corrélation positive avec l'intensité d'emplacement spatial des données ; et l'appareil comprend :
une unité de réception (1101) configurée pour recevoir une demande d'accès ;
une première unité de détermination (1102) configurée pour déterminer des données devant faire l'objet d'un accès et qui nécessitent de faire l'objet d'un accès conformément à la demande d'accès ;
une unité de jugement (1103) configurée pour déterminer un niveau d'intensité d'emplacement spatial des données devant faire l'objet d'un accès ; et
une unité d'attribution (1104) configurée pour attribuer, en fonction du niveau d'intensité de l'emplacement spatial des données devant faire l'objet d'un accès, une sous-unité de cache correspondant au niveau des données devant faire l'objet d'un accès ;
dans lequel l'unité de jugement (1103) comprend :
un module de recueil de statistiques (11031) configuré pour enregistrer des adresses des données devant faire l'objet d'un accès et qui nécessitent de faire l'objet d'un accès conformément aux demandes d'accès, et recueillir des statistiques à propos des règles d'accès des adresses des données devant faire l'objet d'un accès, dans lequel la règle d'accès comprend une quantité de fois ou une probabilité que les données d'une adresse adjacente aux adresses fassent l'objet d'un accès conformément à une autre demande d'accès ; et
un module de classification (11032) configuré pour classifier, en niveaux en fonction de la quantité de fois ou de la probabilité que les données de l'adresse adjacente aux adresses des données devant faire l'objet d'un accès fassent l'objet d'un accès par une autre demande d'accès, l'emplacement spatial des données devant faire l'objet d'un accès.

8. Appareil selon la revendication 7, dans lequel l'appareil comprend en outre :
une unité de calcul (1105) configurée pour recueillir, pendant une période temporelle prédéfinie, des statistiques à propos des niveaux d'intensité de l'emplacement spatial des données devant faire l'objet d'un accès, et calculer un premier rapport, dans lequel le premier rapport est utilisé pour représenter une relation proportionnelle entre ou parmi les données devant faire l'objet d'un accès ayant différents niveaux d'emplacement spatial, dans lequel
l'unité de calcul (1105) est en outre configurée pour calculer un second rapport, dans lequel le second rapport est utilisé pour représenter une relation proportionnelle entre ou parmi les sous-unités de cache dans le cache qui comprennent des lignes de cache présentant des longueurs différentes ; et
une première unité d'ajustement (1106) configurée pour : lorsqu'une différence entre le premier rapport et le second rapport qui sont obtenus par les calculs de l'unité de calcul est supérieure à un seuil prédéfini, ajuster une quantité des lignes de cache dans la sous-unité de cache jusqu'à ce que la différence entre le second rapport et le premier rapport tombe dans une plage du seuil prédéfini après le réglage.

9. Appareil selon la revendication 7 ou 8, dans lequel l'appareil comprend en outre :
une deuxième unité de détermination (1107) configurée pour déterminer, en fonction du niveau d'intensité, qui est obtenu par l'unité de jugement, de l'emplacement spatial des données devant faire l'objet d'un accès, une taille des données à mettre en cache ;
une seconde unité d'ajustement (1108) configurée pour ajuster la longueur de la ligne de cache dans la sous-unité de cache en fonction de la taille, qui est déterminée par la deuxième unité de détermination, des données à mettre en cache, et attribuer une ligne de cache ajustée aux données à mettre en cache, dans lequel une longueur de la ligne de cache ajustée correspond à la taille des données à mettre en cache ; et
une unité de traitement d'index binaire (1109) configurée pour établir et tenir à jour un index binaire sur la base d'un changement de la longueur de la ligne de cache dans la sous-unité de cache, dans lequel l'index binaire est utilisé pour indiquer un domaine signalé et un domaine de données qui se trouvent dans la ligne de cache.

10. Appareil selon la revendication 7, dans lequel l'appareil comprend en outre :
une unité de division configurée pour diviser le cache en voies et/ou en ensembles, pour déterminer les multiples sous-unités de cache, et définir la longueur de la ligne de cache dans chaque sous-unité de cache.

11. Appareil selon la revendication 9, dans lequel
la demande d'accès reçue par l'unité de réception comprend une adresse physique, l'adresse physique est utilisée pour identifier les données devant faire l'objet d'un accès, et l'adresse physique comprend un domaine signalé et un domaine défini qui sont ceux des données devant faire l'objet d'un accès ; et
l'appareil comprend en outre :
une unité d'envoi (1110) configurée pour envoyer la demande d'accès à chacune des sous-unités de cache ; et
une première unité de recherche (1111) configurée pour déterminer une ou plusieurs lignes de cache qui correspondent au domaine défini des données devant faire l'objet d'un accès qui se trouvent dans chacune des sous-unités de cache, comparer les domaines signalés de la ou des lignes de cache avec le domaine signalé des données devant faire l'objet d'un accès, et déterminer une ligne de cache qui a le même domaine signalé que les données devant faire l'objet d'un accès dans la ou les lignes de cache, comme ligne de cache dans laquelle les données devant faire l'objet d'un accès sont stockées.

12. Appareil selon la revendication 9, dans lequel
la demande d'accès reçue par l'unité de réception comprend une adresse physique, l'adresse physique est utilisée pour identifier les données devant faire l'objet d'un accès, et l'adresse physique comprend un domaine signalé et un domaine défini qui sont ceux des données devant faire l'objet d'un accès ; et
l'appareil comprend en outre :
une unité de tenue à jour de liste (1112) configurée pour tenir à jour une liste pour chaque sous-unité de cache, dans lequel la liste est utilisée pour enregistrer une valeur caractéristique des données stockées dans chaque sous-unité de cache ;
une troisième unité de détermination (1113) configurée pour: lorsque la demande d'accès est reçue, déterminer la valeur caractéristique des données devant faire l'objet d'un accès et qui nécessitent de faire l'objet d'un accès conformément à la demande d'accès ;
une quatrième unité de détermination (1114) configurée pour explorer chaque liste tenue à jour par l'unité de tenue à jour de liste, et déterminer une sous-unité de cache qui correspond à une liste dans laquelle la valeur caractéristique des données devant faire l'objet d'un accès est enregistrée en tant que sous-unité de cache cible ; et
une seconde unité de recherche (1115) configurée pour envoyer la demande d'accès à la sous-unité de cache cible, déterminer une ou plusieurs lignes de cache dans la sous-unité de cache cible qui correspond au domaine défini des données devant faire l'objet d'un accès, comparer les domaines signalés de la ou des lignes de cache avec le domaine signalé des données devant faire l'objet d'un accès, et déterminer une ligne de cache qui a le même domaine signalé que les données devant faire l'objet d'un accès dans la ou les lignes de cache, comme ligne de cache dans laquelle les données devant faire l'objet d'un accès sont stockées.
